(19) Europäisches Patentamt
European Patent Office
Office européen des brevets

(11) **EP 4 553 719 A1**

(12) **EUROPEAN PATENT APPLICATION**

(43) Date of publication:
**14.05.2025 Bulletin 2025/20**

(21) Application number: **23306936.8**

(22) Date of filing: **09.11.2023**

(51) International Patent Classification (IPC):
**G06N 10/60** (2022.01)      **G06N 10/40** (2022.01)
**G06N 5/01** (2023.01)

(52) Cooperative Patent Classification (CPC):
**G06N 10/60; G06N 5/01; G06N 10/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Pasqal**
**91300 Massy (FR)**

(72) Inventors:
• **HENRY, Louis-Paul**
**91300 MASSY (FR)**
• **HENRIET, Loic**
**91300 MASSY (FR)**

(74) Representative: **Lavoix**
**2, place d'Estienne d'Orves**
**75441 Paris Cedex 09 (FR)**

(54) **A METHOD FOR ESTIMATING THE CHROMATIC NUMBER OF A GRAPH**

(57) The invention relates to a method for estimating the chromatic number of a graph, the chromatic number being a positive integer comprised in a bounded interval, the method comprising the following phases:
- determining a chromatic information for a positive integer k comprised in the bounded interval,
- repeating the determination phase for other positive integers k comprised in the bounded interval so as to obtain a chromatic information for each considered positive integer k, and
- estimating, by a calculator (14), the chromatic number of the graph on the basis of the chromatic information determined for each positive integer k.

FIG.4

**Description**

TECHNICAL FIELD OF THE INVENTION

The present invention concerns a method for estimating the chromatic number of a graph. The present invention also concerns an associated computing device.

BACKGROUND OF THE INVENTION

Graph coloring is a ubiquitous problem that comes up in graph theory, for instance in the context of resource allocation or planning and scheduling.

Coloring a graph consists in attributing a color to each of its nodes so that no neighboring nodes have the same color. Figuring out a coloring using the minimal number of different colors is a hard problem. It turns out that figuring out the minimal number of colors, known as the chromatic number, of a graph is a NP-hard problem.

A valid coloring of a graph can be seen as a set of non-overlapping independent sets (IS) (subsets of nodes not connected to each other) covering the graph. Based on this knowledge, several algorithms have been developed aiming at finding the maximal independent set(s) (MIS) of a graph (I.e. the IS with the maximal cardinality).

However, these algorithms are focused on the resolution of the maximal independent set, which is very time-consuming. In addition, there is no guarantee that a given MIS will be part of an optimal solution to the coloring problem, so even when the maximal independent set is found, it might not give the good solution for the chromatic number.

SUMMARY OF THE INVENTION

Hence, there exists a need for a quicker and more reliable way to find the chromatic number of a graph.

To this end, the invention relates to a method for estimating the chromatic number of a graph, the graph having vertices and edges linking some of the vertices, the chromatic number being a positive integer comprised in a bounded interval, the method comprising the following phases:

- determining a chromatic information for a positive integer k comprised in the bounded interval of the chromatic number, the determination phase being implemented by a quantum processor and comprising the following steps:

  • building, in the quantum processor, a conformation of particles representing the vertices of the graph, each particle encoding a qubit with a fundamental state and an excited state, the conformation of particles forming a qubit register, the particles being initially in their fundamental state,

  • applying k cycles of transformation on the qubit register, each cycle of transformation comprising:

    ◦ applying laser pulses on the qubit register for driving transition of at least some of the particles from their fundamental state to their excited state, the laser pulses being designed so that two particles, representing vertices which are related by an edge in the graph, cannot be both excited simultaneously,

    ◦ applying a projection operation which expels at least some of the particles in the excited state from the qubit register to obtain an updated qubit register, the eventual next cycle of transformation being applied on the updated qubit register,

  • measuring the number of particles in the qubit register at the end of the k cycles of transformation,

  • repeating the preceding steps several times so as to obtain several measurements, the chromatic information for the positive integer k being determined as a function of such measurements,

- repeating the determination phase for other positive integers k comprised in the bounded interval of the chromatic number so as to obtain a chromatic information for each considered positive integer k, and

- estimating, by a calculator, the chromatic number of the graph on the basis of the chromatic information determined for each positive integer k.

The method according to the invention may comprise one or more of the following features considered alone or in any combination that is technically possible:

- the chromatic number is estimated by determining for each considered positive integer k whether the chromatic number is inferior or equal, or is above, said positive integer k on the basis of the chromatic information determined for said positive integer k;

- the chromatic information of each considered positive integer k is the probability of measuring zero particle at the end of the k cycles of transformation, the chromatic number being inferior or equal to the lowest positive integer k whose probability of measuring zero is above a first number, the chromatic number being strictly above a positive integer k whose probability of measuring zero is inferior or equal a second number;

- the chromatic information of each considered positive integer k is a distribution of the number of particles at the end of the k cycles of transformation, the chromatic number being estimated as a function of a comparison of the distributions of the considered positive integers k;

- the distributions of the considered positive integers k are compared using a table of distances between pairs of distribution;

- the determination phase is also carried out for positive integers k which are the boundaries of the bounded interval of the chromatic number, the distribution of each positive integer, different from the boundaries, being compared to the distribution of the boundaries used as reference distributions;

- for each determination phase, during the building step, the particles forming the qubit register are trapped in trapping sites, the trapping sites being attractive for particles in the fundamental state and repulsive for particles in the excited state, the trapping sites being turned off during the application of laser pulses on the qubit register and turned on during the projection operations so as to expel the particles in the excited state;

- the projection operation consists in applying an electric field on the qubit register so as to ionize the particles in the excited state, enabling to expulse them;

- the particles are alkaline earth atoms, the projection operation consists in applying a laser pulse enabling an autoionization transition of an inner electron of the atoms in the excited state so as to autoionized such atoms, enabling to expulse them;

- the particles are cooled down between each cycle of transformation;

- the method also comprises imaging the qubit register after each cycle of transformation so as to determine the position of particles corresponding to an independent set of vertices not connected by an edge, enabling to determine a way of coloring the graph for the estimated chromatic number;

- the particles are atoms whose excited state is a Rydberg state, during the k cycles of transformation, the applied laser pulses being uniform and resonant with constant Rabi frequency and having an amplitude set so that the Rydberg blockade effect enables to reproduce the edges of the graph;

- the lower boundary of the bounded interval of the chromatic number is at least equal to one and the upper boundary of the bounded interval of the chromatic number is at most equal to the number of vertices of the graph;

- the particles are polarizable particles sensitive to alternative current Stark shift from lasers, the particles being preferably neutral atoms, such as alkali atoms or alkaline-earth atoms.

The invention also relates to a computing device comprising:

- a quantum processor configured for carrying out the determination phases of the method as previously described, and

- a calculator, such as a classical computer, configured for carrying out the estimating phase of the method as previously described.

BRIEF DESCRIPTION OF THE DRAWINGS

The invention will be easier to understand in view of the following description, provided solely as an example and with reference to the appended drawings in which:

- Figure 1 is a schematic view of an example of a computing device configured for implementing a method for estimating the chromatic number of a graph,

- Figure 2 is schematic view of an example of an organigram of a method for estimating the chromatic number of a graph,

- Figure 3 is schematic view of an example of a graph,

- Figure 4 illustrates an example of steps of a phase of determining a chromatic information for a positive integer k, the steps comprising the building of a conformation of particles, the application of k cycles of transformation (here 4), and measuring the number of particles at the end of the k cycles (here 1),

- Figure 5 is an example similar to those of figure 4, but for which the number of particles measured at the end of the k cycles is zero,

- Figure 6 is an example of a graphic illustrating the probability of measuring no atom at the end of the k cycles of transformation as a function of the value of k,

- Figure 7 is an example of a distribution of a number of measured particles at the end of k cycles of transformation for several values of k, and

- Figure 8 is an example of a graph for which a distribution of a number of measured particles at the end of k cycles of transformation for several values of k (k = 1 to 5) has been determined, as well as a table of distances between pairs of distributions.

DETAILED DESCRIPTION OF SOME EMBODIMENTS

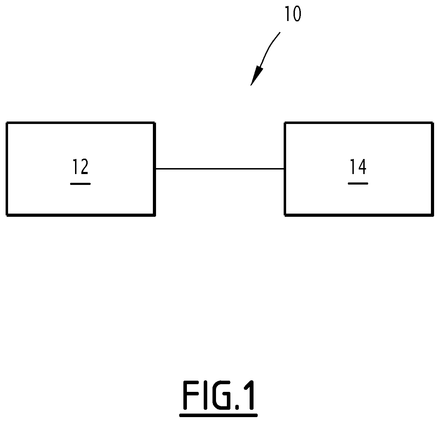

A computing device 10 is illustrated on figure 1. The computing device 10 is configured to implement a method for estimating the chromatic number N of a graph G, which will be described later in the description.

The computing device 10 comprises a quantum processor 12 (quantum processing unit or QPU) and a calculator 14 (e.g., a classical computer).

In an example, the quantum processor 12 comprises a source of particles P, a generator of trapping sites for particles P, a detecting device and hardware elements.

In the case of neutral atoms, the source of particles P comprises a vacuum chamber in which the particles P (for example atoms) are located. In particular, during use, a vacuum is created in the vacuum chamber and a dilute atomic vapor is formed in the vacuum chamber. Other embodiments are nonetheless possible.

The generator of trapping sites is able to generate a laser beam which when focused generates an array of trapping sites for particles P (e.g., optical tweezers). For example, the array of trapping sites can be 2-dimensional or 3-dimensional.

In an example of implementation, the generator of trapping sites comprises a laser source, or equivalent, able to generate a laser beam and a beam shaper able to shape the laser beam (e.g., to impart a specific intensity pattern to the laser beam) so as to obtain an array of trapping sites for particles P when the laser beam is focused.

The beam shaper is, for example, a spatial light modulator (SLM), such as an optical phase modulator, preferably a liquid crystal optical modulator (LCOS-SLM). In another example, the beam shaper comprises one or more acousto-optical deflector, or a device with metasurfaces.

The detecting device is configured to detect the presence of particle(s) P in the qubit register. The detecting device is, for example, a camera such as a charge-coupled device (CCD) camera, or any suitable imaging technology. For example, in the case of atoms, the camera is suitable to detect the fluorescence emitted from the atoms.

The hardware elements enable to manipulate the particles P trapped in the trapping sites and forming the qubits, so as to perform quantum operations on the qubits. In other words, the particles P trapped in the trapping sites collectively form a quantum register.

Examples of quantum processors based on neutral atoms are described in the article Loïc Henriet, Lucas Beguin, Adrien Signoles, Thierry Lahaye, Antoine Browaeys, Georges-Olivier Reymond, and Christophe Jurczak. Quantum computing with neutral atoms. *Quantum,* 4:327, Septembre 2020. ISSN 2521-327X. doi:10.22331/q-2020-09-21-327.

Typically, the quantum processor 12 uses the quantum properties of matter, such as superposition and entanglement, to perform operations on the qubits. In particular, a qubit refers to a two-level quantum system.

In a non-limiting example, a qubit may comprise two basic quantum states $|0\rangle$ and $|1\rangle$ representing the possible quantum states of the qubit. According to the superposition principle of quantum mechanics, any superposition of the form $a|0\rangle + b|1\rangle$ (a and b being complex numbers and $aa^*+bb^*=1$) is a possible quantum state of the qubit.

The particles P meant to be trapped in the trapping sites are polarizable particles P sensitive to alternative current (AC) Stark shift from lasers.

Preferably, the particles P are atoms, and in particular electrically neutral atoms. Neutral atoms are, for example, alkali atoms (such as Rubidium or Cesium atoms) or alkaline-earth atoms (such as Strontium or Ytterbium atoms). In a variant, the particles P are photons or molecules.

The particles P have a fundamental state (no excitation) and at least one excited state. The excited state is, for example, a Rydberg state.

The calculator 14 is, for example, a classical computer. The calculator 14 comprises typically a processor comprising a data processing unit, memories and a reader for information media. Eventually, the calculator 14 comprises a human machine interface, such as a keyboard, and a display.

In an example of implementation, the calculator 14 interacts with a computer program product. The computer program product comprises an information medium. The information medium is a medium readable by the calculator 14, usually by the data processing unit. The readable information medium is a medium suitable for storing electronic instructions and capable of being coupled to a computer system bus. On the information medium is stored the computer program comprising program instructions. The computer program is loadable on the data processing unit and is adapted to entail the implementation of the estimation phase of a method that will be described later in the description, when the computer program is loaded on the processing unit of the calculator.

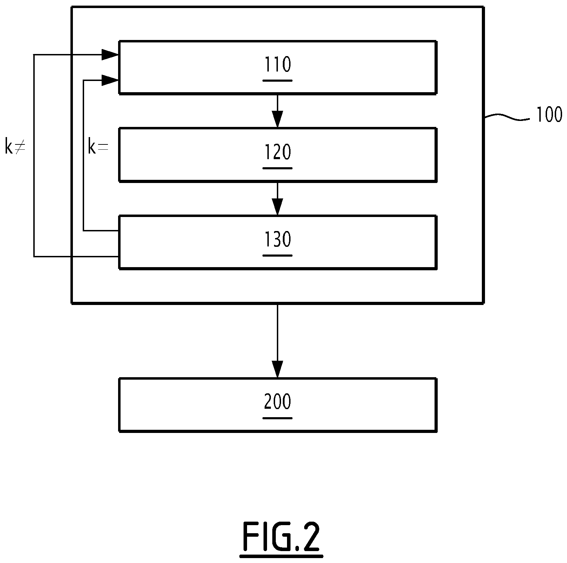

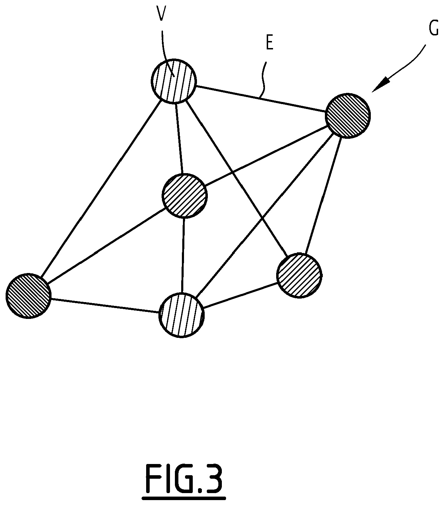

A method for estimating the chromatic number N of a graph G, will now be described with reference to the organigram of figure 2, and to figures 3 to 7, which illustrate examples of some steps of this method.

The graph G have vertices V and edges E linking some of the vertices V. The method aims at determining the chromatic number N of such a graph G.

The chromatic number N of a graph G is the minimal number of colors needed to color the vertices V in such a way that two adjacent vertices V does not have the same color. The chromatic number N is a positive integer comprised in a bounded interval.

In particular, the lower boundary of the bounded interval of the chromatic number N is at least equal to one and the upper boundary of the bounded interval of the chromatic number N is at most equal to the number of vertices V of the graph G. The lower and upper boundaries for the chromatic number N can be more precisely defined (tighter boundaries), for example on the basis of the article J. Mitchem, "On various algorithms for estimating the chromatic number of a graph," The Computer Journal, vol. 19, no. 2, pp. 182-183, 1976.

An example of a graph G is illustrated on figure 3 with 6 vertices V and 10 edges E. The chromatic number N is equal to 3 for this graph G and figure 3 illustrates a way of coloring the graph G with three colors.

The determination method comprises a phase 100 for determining a chromatic information for a positive integer k comprised in the bounded interval of the chromatic number N. The chromatic information gives an information on the chromatic number N of a graph G relative to the positive integer k.

The positive integer k is, for example, chosen in the bounded interval by an operator, or is selected in the bounded interval at random by a calculator, or according to a selection algorithm.

The determination phase 100 is implemented by the quantum processor 12 of the computing device 10.

The determination phase 100 comprises a step 110 of building, in the quantum processor, a conformation of particles P representing the vertices V of the graph G.

A conformation of particles P is a disposition of particles P in space. The conformation of particles P forms a qubit register. The conformation of particles P can be in 2D or 3D.

Each particle P encodes a qubit with a fundamental state (no excitation, I0> state) and an excited state (I1> state). The particles P are initially in their fundamental state. The excited state is, for example, a Rydberg state.

For example, the particles P are loaded in trapping sites and are then rearranged (using for example optical tweezers) until obtaining the conformation. In the case of atoms, atoms are, for example, loaded in the traps from a background gas of cold atoms. Starting from an initial stochastic filling of the traps, the atoms are then reshuffled into the desired position.

Other ways of building the conformation of particles P are nonetheless possible.

The determination phase 100 comprises a step 120 of applying k cycles of transformation on the qubit register. The number of cycles of transformation is thus equal to the considered positive integer k.

Each cycle of transformation comprises the following sequence:

  ∘ a) applying laser pulses on the qubit register for driving transition of at least some of the particles P from their fundamental state to their excited state. The laser pulses are designed so that two particles P, representing vertices V which are related by an edge E in the graph G, cannot be both excited simultaneously.

  ∘ b) applying a projection operation which expels at least some of the particles P in the excited state from the qubit register (the other particles P are in their fundamental state) to obtain an updated qubit register. The eventual next cycle of transformation is applied on the updated qubit register.

In an example, the application operation a) and the projection operation b) are carried out only on a subset of particles P of the qubits register. This subset could be different at each cycle of transformation. This can be useful, for example, when each node has a specific set of allowed colors to be used (for example these could correspond to two different resources to be allocated to different types of facilities). In that case, each step can be understood as trying to allocate a definite color on the nodes where it is allowed.

In a variant, the application operation a) and the projection operation b) are carried out on all the particles P of the qubit register.

In other words, we consider M particles P modeling the M vertices V of the graph G. After the first pulse and before the first projection operation, the wavefunction of the system is $|\Psi\rangle = \Sigma_{s_j \in IS} \alpha_j \, |s_j\rangle$. IS stands for independent set. $|s_j\rangle$ denotes the state in which all the particles P in the independent set $s_j$ are (ie $|1\rangle$ state). With probability $|\alpha_j|^2$, all the particles P in the independent set $s_j$ are expelled from the register, and we end up with a reduced wavefunction over $M - |s_j|$ qubits, with all the remaining particles in the 10) state. The same procedure (new pulse + projection operation) is repeated on the updated register.

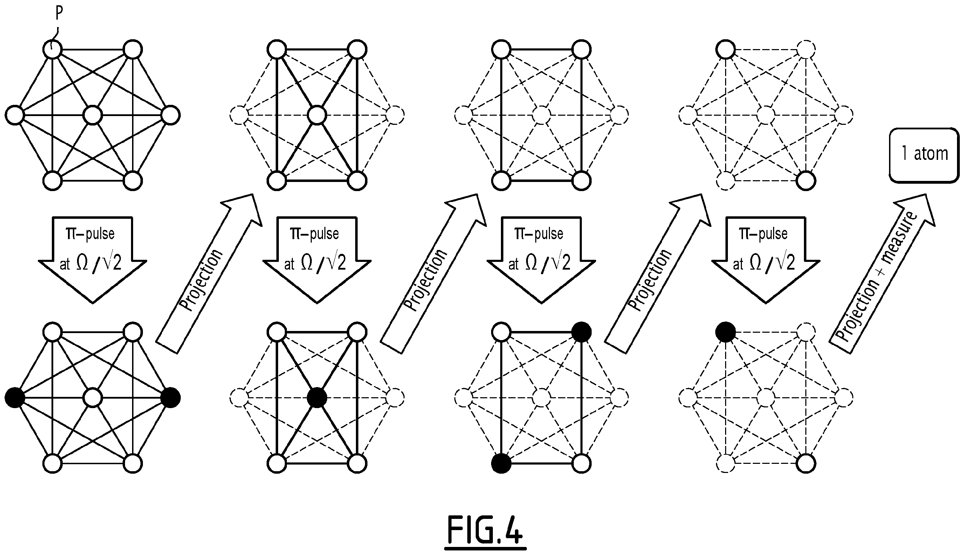

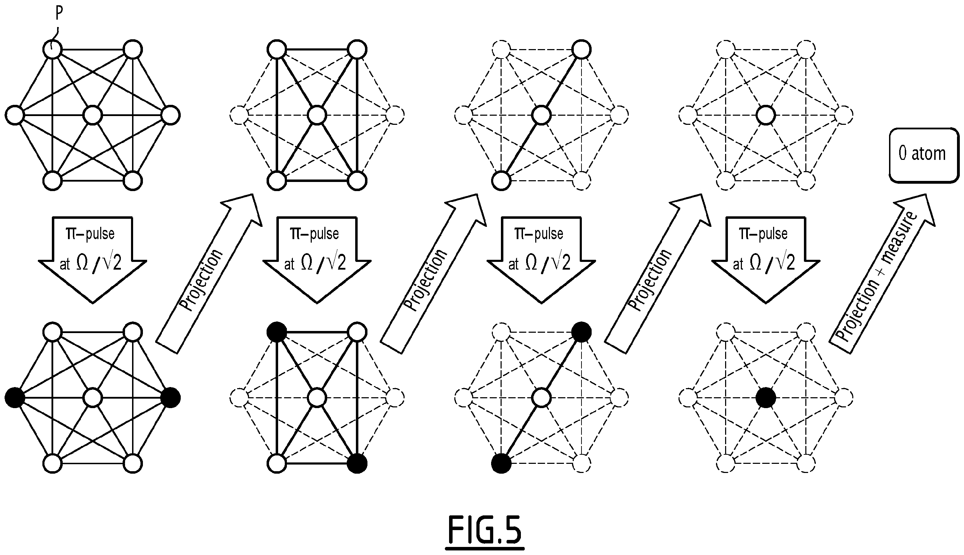

Figures 4 and 5 give example of the application of k cycles of transformation starting from particles P in an initial conformation. In these examples, k=4. On these figures, only one particle is referenced by the letter P not to overcharge the figures. The particles in the fundamental state are in white, and the excited particles are in black.

With regard to a), when the particles P are atoms whose excited state is a Rydberg state, the applied laser pulses are, for example, uniform and resonant with constant Rabi frequency. The amplitude of such laser pulses is set so that the Rydberg blockade effect enables to reproduce the edges E of the graph G. Hence, for two atoms separated by a distance $r < r_b$, the Rydberg blockade effect prevents the two atoms to be excited at the same time. Here $r_b = \left(\frac{C_6}{\hbar\Omega}\right)^{\frac{1}{6}}$ is the so-called Rydberg blockade radius.

In a variant, other types of laser pulses can be used. For example, laser pulses aiming at preparing the MIS/ground state of the "surviving" subgraph, or even laser pulses whose parameters are optimized in a close loop, for example so as to optimize the accuracy of the predictions.

With regard to the projection operation in step b), in an example of implementation, the particles P forming the qubit register are trapped in trapping sites which are attractive for particles P in the fundamental state and repulsive for particles P in the excited state. The trapping sites are turned off during the application of laser pulses on the qubit register and turned on during the projection operation, which has the consequence of expelling the particles P that are in the excited state. The particles P which are in their fundamental state are then trapped (or recaptured) in the trapping sites.

In a variant of the projection operation, the projection operation consists in applying an electric field on the qubit register so as to ionize the particles P in the excited state, enabling to expulse them. To do that, ionization electrodes are for example incorporated in the vicinity of the particles P. In the case of Rydberg atoms, such atoms are very sensitive to electric fields. Hence, applying a strong electric field would ionize said atoms, as proposed in the article : de Léséleuc, Sylvain et al. "Analysis of imperfections in the coherent optical excitation of single atoms to Rydberg states." Physical Review A 97 (2018): 053803.

Yet another variant of the projection operation exists, and is specifically applicable to the case where the particles P are alkaline earth atoms, such as Strontium. The projection operation consists in applying a laser pulse enabling an autoionization transition of an inner electron of the atoms in the excited state so as to autoionized such atoms, enabling to expulse them. An example is described in the article Ivaylo S. Madjarov, et al., "High-fidelity entanglement and detection of alkaline-earth Rydberg atoms".

For example, with Strontium atoms used as qubits (or other alkaline earth atoms), it is possible to expel atoms in the Rydberg state from the system in a time of the order of 1-10 ns. To do this, an autoionization transition of the inner electron is addressed, for example as illustrated in Nature Physics volume 16, pages 857-861 (2020).

Optionally, regardless of the specific projection operation used, the particles P can be cooled down between each cycle of transformation, which enables to decrease thermal agitation and improves the quality of results, for example for higher values of k.

The determination phase 100 comprises a step 130 of measuring the number of particles P in the qubit register at the end of the k cycles of transformation. The measurement is, for example, carried out by the detecting device of the quantum processor. For example, in the case of atoms, a camera detects the fluorescence emitted from the eventual remaining atoms. The remaining atoms appear as bright spots.

In the example of figure 4, 1 particle is detected at the end of the k=4 cycles of transformation. In the example of figure 5, no particles are detected at the end of the k=4 cycles of transformation.

Optionally, the qubit register is imaged after each cycle of transformation so as to determine the position of particles P corresponding to an independent set of vertices V not connected by an edge E, enabling to determine a way of coloring the graph G for the estimated chromatic number N. For example, if it was determined that the chromatic number N is equal to 3, the coloring of the graph G is obtained by looking the images obtained after each cycle for k=3.

The building step 110, application step 120 and measuring step 130 are then repeated several times with the same positive integer k so as to obtain several measurements for the positive integer k.

The chromatic information for the positive integer k is determined as a function of such measurements. The chromatic information is different from the chromatic number N. Each chromatic information is specific to a positive integer k and indicates a probability relative to the detected particles P or the absence of detection of particle P. For example, the measurements are used to compute such a probability relative to the detected particles P or the absence of detection of particle P.

The determination phase 100 is then repeated for other positive integers k comprised in the bounded interval of the chromatic number N so as to obtain a chromatic information for each considered positive integer k.

In an example, the determination phase 100 is repeated for all the positive integer k comprised in the bounded interval of the chromatic number N. In a variant, the determination phase 100 is repeated only for some positive integers k of the bounded interval.

The determination method comprises a phase 200 for estimating the chromatic number N of the graph G on the basis of the chromatic information determined for each positive integer k.

The estimation phase 200 is, for example, carried out by the calculator 14 (classic computer) of the computing device 10.

Preferably, the chromatic number N is estimated by determining, for each considered positive integer k, whether the chromatic number N is inferior or equal, or is above, said positive integer k on the basis of the chromatic information determined for said positive integer k.

In a first example of implementation, the chromatic information of each considered positive integer k is the probability of measuring zero particle P at the end of the k cycles of transformation. The chromatic number N is inferior or equal to the lowest positive integer k whose probability of measuring zero is above a first number (for example 20 %). The chromatic number N is strictly above a positive integer k whose probability of measuring zero is inferior or equal a second number (for example zero, or inferior or equal to 5 % to have a tolerance range). The first number and the second number are for example arbitrary thresholds.

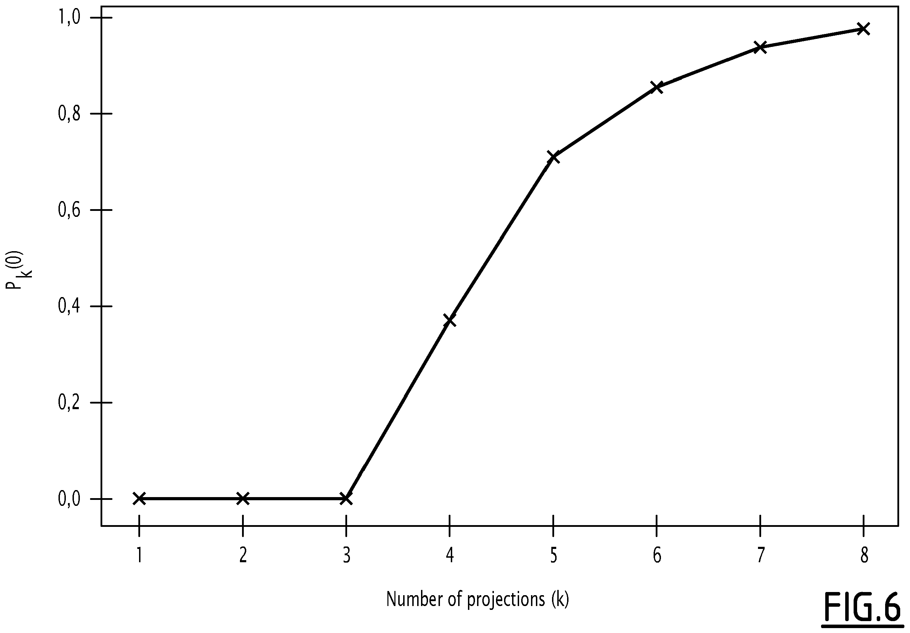

For example, as illustrated on figure 6, the probability of detecting zero particle P is above 70 % from k=5. Hence, the chromatic number N is inferior or equal to 5. For k= 1, 2 and 3, the probability of detecting zero particle P is equal to 0. Hence, the chromatic number N is strictly above 3. Therefore, the chromatic number N is equal to 4 or 5.

In addition, in this first example of implementation, if one traces the probability of detecting zero particle P as a function of k, this highlights a jump when k crosses the chromatic number N, which enables to determine the chromatic number. This jump is obtained for k=4 in the example of figure 6.

In a second example of implementation, the chromatic information of each considered positive integer k is a distribution $p_k$ of the number of particles P at the end of the k cycles of transformation. The distribution $p_k$ is obtained with the measurements obtained for all the repetitions. Each distribution $p_k$ gives a probability for different number of detected particles. The chromatic number N is estimated as a function of a comparison of the distributions $p_k$ of the considered positive integers k.

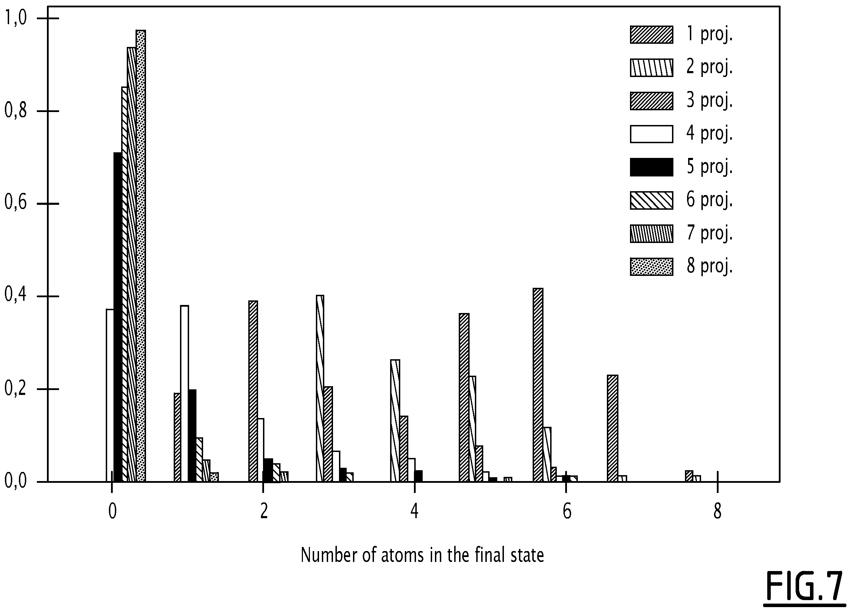

Figure 7 illustrates an example of several distributions of the number of particles P (from 0 to 8) for different positive integers k (from k=1 to k= 8).

For example, the distributions $p_k$ of the considered positive integers k are compared using a table of distances between pairs of distribution $(p_k, p_k)$. For example, a table of the distances between pairs of distributions $(p_k, p_k)$ is built, enabling to group each distribution $p_k$ into two classes: below or above the chromatic number N.

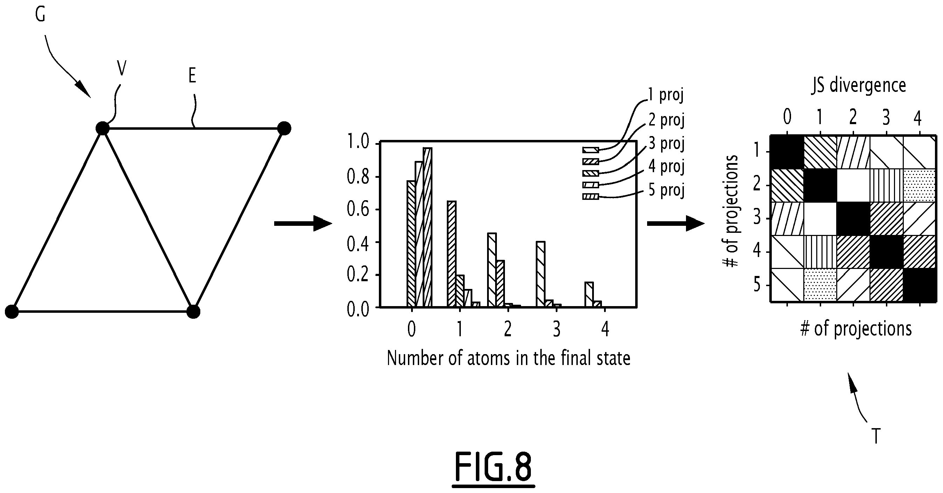

Figure 8 illustrates an example of a table T of distances built for a graph G as a function of several distributions of the number of particles P (from 0 to 4) for different positive integers k (from k=1 to k= 5). In this example, the table T of distances enables to obtain two classes: inferior to k=3 and superior or equal to k =3, which enables to deduce that the chromatic number N is equal to 3.

For example, the determination phase 100 is also carried out for positive integers k1 and k2 which are the boundaries of the bounded interval of the chromatic number N. The distribution $p_k$ of each positive integer, different from the boundaries, is compared to the distribution $p_{k1}$ and $p_{k2}$ of the boundaries used as reference distributions. For example, the following rules could be applied:

- if the distance is below the threshold for the lower boundary, and above for the upper boundary, the positive integer k of the considered distribution $p_k$ is below the chromatic number N (because close from the lower boundary), and

- if the distance is below the threshold for the upper boundary, and above for the lower boundary, the positive integer k of the considered distribution $p_k$ is above the chromatic number N (because close from the upper boundary).

The second example of implementation appears to be more robust than the first example of implementation. Indeed, if the system is projected onto a non-independent state, or in the presence of noise, one might expel all the atoms for a value of k that is smaller than the chromatic number N, which is why this second approach can be useful.

Hence, the above method enables to estimate the chromatic number N of a graph G using a quantum processor. Eventually, the method can be adapted to determine optimal colorings.

The method enables to have several cycles of transformation launched before carrying out a measurement, which is quicker than in the state of the art, where the measurements are carried out after each cycle of transformation.

The person skilled in the art will understand that the embodiments and variants described above in the description can all be combined provided that they are technically compatible.

**Claims**

1. A method for estimating the chromatic number (N) of a graph (G), the graph (G) having vertices (V) and edges (E) linking some of the vertices (V), the chromatic number (N) being a positive integer comprised in a bounded interval, the method comprising the following phases:

   - determining a chromatic information for a positive integer k comprised in the bounded interval of the chromatic number (N), the determination phase being implemented by a quantum processor (12) and comprising the following steps:

     • building, in the quantum processor, a conformation of particles (P) representing the vertices (V) of the graph (G), each particle (P) encoding a qubit with a fundamental state and an excited state, the conformation of particles (P) forming a qubit register, the particles (P) being initially in their fundamental state,
     • applying k cycles of transformation on the qubit register, each cycle of transformation comprising:

       ◦ applying laser pulses on the qubit register for driving transition of at least some of the particles (P) from their fundamental state to their excited state, the laser pulses being designed so that two particles (P), representing vertices (V) which are related by an edge (E) in the graph (G), cannot be both excited simultaneously,
       ◦ applying a projection operation which expels at least some of the particles (P) in the excited state from the qubit register to obtain an updated qubit register, the eventual next cycle of transformation being applied on the updated qubit register,

     • measuring the number of particles (P) in the qubit register at the end of the k cycles of transformation,
     • repeating the preceding steps several times so as to obtain several measurements, the chromatic information for the positive integer k being determined as a function of such measurements,

- repeating the determination phase for other positive integers k comprised in the bounded interval of the chromatic number (N) so as to obtain a chromatic information for each considered positive integer k, and
- estimating, by a calculator (14), the chromatic number (N) of the graph (G) on the basis of the chromatic information determined for each positive integer k.

2. A method according to claim 1, wherein the chromatic number (N) is estimated by determining for each considered positive integer k whether the chromatic number (N) is inferior or equal, or is above, said positive integer k on the basis of the chromatic information determined for said positive integer k.

3. A method according to claim 2, wherein the chromatic information of each considered positive integer k is the probability of measuring zero particle (P) at the end of the k cycles of transformation, the chromatic number (N) being inferior or equal to the lowest positive integer k whose probability of measuring zero is above a first number, the chromatic number (N) being strictly above a positive integer k whose probability of measuring zero is inferior or equal a second number.

4. A method according to claim 2, wherein the chromatic information of each considered positive integer k is a distribution $(p_k)$ of the number of particles (P) at the end of the k cycles of transformation, the chromatic number (N) being estimated as a function of a comparison of the distributions $(p_k)$ of the considered positive integers k.

5. A method according to claim 4, wherein the distributions $(p_k)$ of the considered positive integers k are compared using a table of distances between pairs of distribution $(p_k, pk)$.

6. A method according to claim 4 or 5, wherein the determination phase is also carried out for positive integers k which are the boundaries of the bounded interval of the chromatic number (N), the distribution $(p_k)$ of each positive integer, different from the boundaries, being compared to the distribution $(p_k)$ of the boundaries used as reference distributions.

7. A method according to any one of claims 1 to 6, wherein, for each determination phase, during the building step, the particles (P) forming the qubit register are trapped in trapping sites, the trapping sites being attractive for particles (P) in the fundamental state and repulsive for particles (P) in the excited state, the trapping sites being turned off during the application of laser pulses on the qubit register and turned on during the projection operations so as to expel the particles (P) in the excited state.

8. A method according to any one of claims 1 to 6, wherein the projection operation consists in applying an electric field on the qubit register so as to ionize the particles (P) in the excited state, enabling to expulse them.

9. A method according to any one of claims 1 to 6, wherein the particles (P) are alkaline earth atoms, the projection operation consists in applying a laser pulse enabling an autoionization transition of an inner electron of the atoms in the excited state so as to autoionized such atoms, enabling to expulse them.

10. A method according to any one of claims 1 to 9, wherein the particles (P) are cooled down between each cycle of transformation.

11. A method according to any one of claims 1 to 10, wherein the method also comprises imaging the qubit register after each cycle of transformation so as to determine the position of particles (P) corresponding to an independent set of vertices (V) not connected by an edge (E), enabling to determine a way of coloring the graph (G) for the estimated chromatic number (N).

12. A method according to any one of claims 1 to 11, wherein the particles (P) are atoms whose excited state is a Rydberg state, during the k cycles of transformation, the applied laser pulses being uniform and resonant with constant Rabi frequency and having an amplitude set so that the Rydberg blockade effect enables to reproduce the edges (E) of the graph (G).

13. A method according to any one of claims 1 to 12, wherein the lower boundary of the bounded interval of the chromatic number (N) is at least equal to one and the upper boundary of the bounded interval of the chromatic number (N) is at most equal to the number of vertices (V) of the graph (G).

14. A method according to any one of claims 1 to 13, wherein the particles (P) are polarizable particles (P) sensitive to alternative current Stark shift from lasers, the particles (P) being preferably neutral atoms, such as alkali atoms or alkaline-earth atoms.

15. A computing device (10) comprising:

- a quantum processor (12) configured for carrying out the determination phases of the method according to any one of claims 1 to 14, and
- a calculator (14), such as a classical computer, configured for carrying out the estimating phase of the method according to any one of claims 1 to 14.

10

12    14

# FIG.1

FIG.2

FIG.3

FIG.4

FIG.5

FIG.6

FIG.7

FIG.8

Europäisches
Patentamt

European
Patent Office

Office européen
des brevets

# EUROPEAN SEARCH REPORT

**Application Number**

EP 23 30 6936

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VERCELLINO CHIARA ET AL: "BBQ-mIS: A Parallel Quantum Algorithm for Graph Coloring Problems", 2023 IEEE INTERNATIONAL CONFERENCE ON QUANTUM COMPUTING AND ENGINEERING (QCE), IEEE, vol. 2, 17 September 2023 (2023-09-17), pages 141-147, XP034478796, DOI: 10.1109/QCE57702.2023.10198 [retrieved on 2023-11-30] * abstract * * pages 1-6 * | 1-15 | INV. G06N10/60 G06N10/40 G06N5/01 |
| A | SYLVAIN DE L\'ES\'ELEUC ET AL: "Analysis of imperfections in the coherent optical excitation of single atoms to Rydberg states", ARXIV.ORG, CORNELL UNIVERSITY LIBRARY, 201 OLIN LIBRARY CORNELL UNIVERSITY ITHACA, NY 14853, 28 February 2018 (2018-02-28), XP081213701, DOI: 10.1103/PHYSREVA.97.053803 * abstract * * pages 1-5 * | 1-15 | |
| A | US 11 631 024 B2 (CALIFORNIA INST OF TECHN [US]) 18 April 2023 (2023-04-18) * figures 1a-1c, 5 * * column 1 - column 9 * | 1-15 | TECHNICAL FIELDS SEARCHED (IPC) G06N |

The present search report has been drawn up for all claims

| Place of search | Date of completion of the search | Examiner |
|---|---|---|
| The Hague | 17 April 2024 | Keresztury, Bence |

EPO FORM 1503 03.82 (P04C01)

## ANNEX TO THE EUROPEAN SEARCH REPORT
## ON EUROPEAN PATENT APPLICATION NO.

EP 23 30 6936

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2024

| Patent document cited in search report | | Publication date | Patent family member(s) | | Publication date |
|---|---|---|---|---|---|
| US 11631024 | B2 | 18-04-2023 | US | 2022238245 A1 | 28-07-2022 |
| | | | US | 2023342645 A1 | 26-10-2023 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. MITCHEM**. On various algorithms for estimating the chromatic number of a graph. *The Computer Journal*, 1976, vol. 19 (2), 182-183
- **LÉSÉLEUC, SYLVAIN et al.** Analysis of imperfections in the coherent optical excitation of single atoms to Rydberg states. *Physical Review A*, 2018, vol. 97, 053803
- **IVAYLO S. MADJAROV et al.** *High-fidelity entanglement and detection of alkaline-earth Rydberg atoms*
- *Nature Physics*, 2020, vol. 16, 857-861